# EUROPEAN PATENT SPECIFICATION

(11) **EP 0 376 459 B1**
(45) Date of publication and mention of the grant of the patent: **02.05.1997**
(21) Application number: 89311811.7
(22) Date of filing: 15.11.1989
(51) Int. Cl.: G11B 5/11, G11B 5/127, G11B 5/187, G11B 5/31, G11B 5/33, G11B 5/39

(54) **Recording heads with side shields**
Aufzeichnungsköpfe mit Seitenabschirmung
Têtes d'enregistrement à écrans latéraux

(30) Priority: 30.12.1988 US 292397
(43) Date of publication of application: 04.07.1990
(73) Proprietor: QUANTUM CORPORATION, Milpitas California 95035 (US)
(72) Inventor: Das, Shyam Chandra, Sudbury Massachusetts 01776 (US)
(74) Representative: Goodman, Christopher

(56) References cited:
- EP-A- 0 317 633
- EP-A- 0 333 347
- WO-A-88/02166
- GB-A- 2 092 807
- JP-A- 1 224 909
- US-A- 3 355 727
- US-A- 4 374 403
- PATENT ABSTRACTS OF JAPAN vol. 13, no. 324 (P-903)(3672) 21 July 1989 & JP-A-10 91 313
- IBM TECHNICAL DISCLOSURE BULLETIN, vol. 23, no. 11, April 1981, Armonk, NY, US, pp 5097-5098; P.A. ALBERT ET AL.
- PATENT ABSTRACTS OF JAPAN vol. 8, no. 248 (P-313) 14 November 1984 & JP-A-59 119 522
- PATENT ABSTRACTS OF JAPAN vol. 7, no. 038 (P-176) 16 February 1983 & JP-A-57 189 321
- PATENT ABSTRACTS OF JAPAN vol. 9, no. 105 (P-354) 9 May 1985 & JP-A-59 227 022
- PATENT ABSTRACTS OF JAPAN vol. 12, no. 180 (P-709) 27 May 1988 & JP-A-62 291 713
- PATENT ABSTRACTS OF JAPAN vol. 7, no. 212 (P-224) 20 September 1983 & JP-A-58 108 018
- PATENT ABSTRACTS OF JAPAN vol. 12, no. 238 (P-726) 7 July 1988 JP-A-63 029 311

## Description

This invention relates to magnetic recording heads.

Magnetic recording heads are used for reading and writing data onto magnetic media such as magnetic disks. Information on the disks is contained in concentric tracks on the disk. As the number of tracks per inch is increased in magnetic recording, cross talk with adjacent tracks becomes more and more of a problem. During write, fringing fields from the write poles can erase or corrupt information on adjacent tracks. During read, flux from adjacent tracks can corrupt the read process. It is therefore desirable to substantially isolate read/write heads from adjacent tracks.

Japanese Patent Publication No. JP-62-29713 discloses an MR element that is shielded by an upper yoke and a lower yoke. British Patent Application No. GB-2,092,807-A discloses a magnetic head having a magnetic recording or reading pole and a closing pole constituted by a ferrite ring disposed coaxially around the recording or reading pole. Oshima et al., US Patent No. 4,374,403 discloses a magnetic switching device having shield cores that shield the magnetic switching device from unnecessary magnetic signals on a magnetic tape and that constitute a closed magnetic path including a gap. Gaubatz, US Patent No. 3,355,727 discloses a shield utilized as a flux path for a magnetic head, the shield being concentric with the core and enclosing the entire core.

According to the invention there is provided a process for forming a magnetic head according to claim 1.

### Brief Description of the Drawing

Fig. 1 is a pole tip view of a two-pole head suitable for longitudinal or vertical recording;
Fig. 2 is a pole tip view of a three-pole head for vertical recording;
Fig. 3 is a cross-sectional view of a symmetric two-pole head employing an inductive coil;
Fig. 4 is a cross-sectional view of a symmetric two-pole head employing a Hall element sensor;
Fig. 5 is a cross-sectional view of a symmetric two-pole head employing an MR element;
Fig. 6 is a pole tip view of a symmetric two-pole head having saturable side shields;
Fig. 7 is a cross-sectional view of an asymmetric two-pole head employing an inductive sensor;
Fig. 8 is a cross-sectional view of an asymmetric two-pole head employing a Hall element;
Fig. 9 is a cross-sectional view of an asymmetric two-pole head employing an MR sensor;
Fig. 10 is a pole tip view of an asymmetric two-pole head having saturable side shields for a grounded P2;
Fig. 11 is a pole tip view of another asymmetric two-pole head having saturable side shields for a grounded P1;
Fig. 12 is a pole tip view of a three-pole head before track trim;
Fig. 13 is a pole tip view of a three-pole head after complete track trim and including shield gap and side shields;
Fig. 14 is a pole tip view of a three-pole head with partial track trim;
Fig. 15 is a pole tip view of a three-pole head with partial track trim and side shields;
Figs. 16A and 16B are thematic planar and pole tip views, respectively, of a shielded monopole read/write head, shown primarily for the purpose of describing the pole tip region;
Fig. 16C is a side view of a shielded monopole;
Fig. 17 is a pole tip view of a three-pole read/write head for vertical recording with saturable side shields;
Fig. 18 is a pole tip view of a two-pole head with saturable side shields;
Fig. 19 is a pole tip view of a three-pole head with saturable side shields;
Fig. 20 is a pole tip view of a three-pole head with non-saturable side shields;
Fig. 21 is a planar view of a two-pole or monopole head with self-grounded side shields;
Fig. 22 is a side view of a shielded monopole made according to an embodiment of the invention;
Figs. 23A,B - 25A,B show stages in a preferred process of the invention where Fig. 23A is a cross-section taken along the line 1-1 in the plan view of Fig. 23B, Fig. 24A is a cross-section taken along the line 2-2 in the plan view of Fig. 24B, and Fig. 25A is a cross-section taken along the line 3-3 in the plan view of Fig. 25B;
Fig. 26A is a side cross-sectional view of a latter stage of the preferred process;
Fig. 26B shows a preferred embodiment of the probe of Fig. 26A;
Fig. 27 is a side cross-sectional view showing formation of a convex structure above the probe before formation of the upper shield section;
Figs. 28-29 show MR and Hall embodiments of the invention; and
Fig. 30 shows an alternate flux return path.

### Description of a Preferred Embodiment

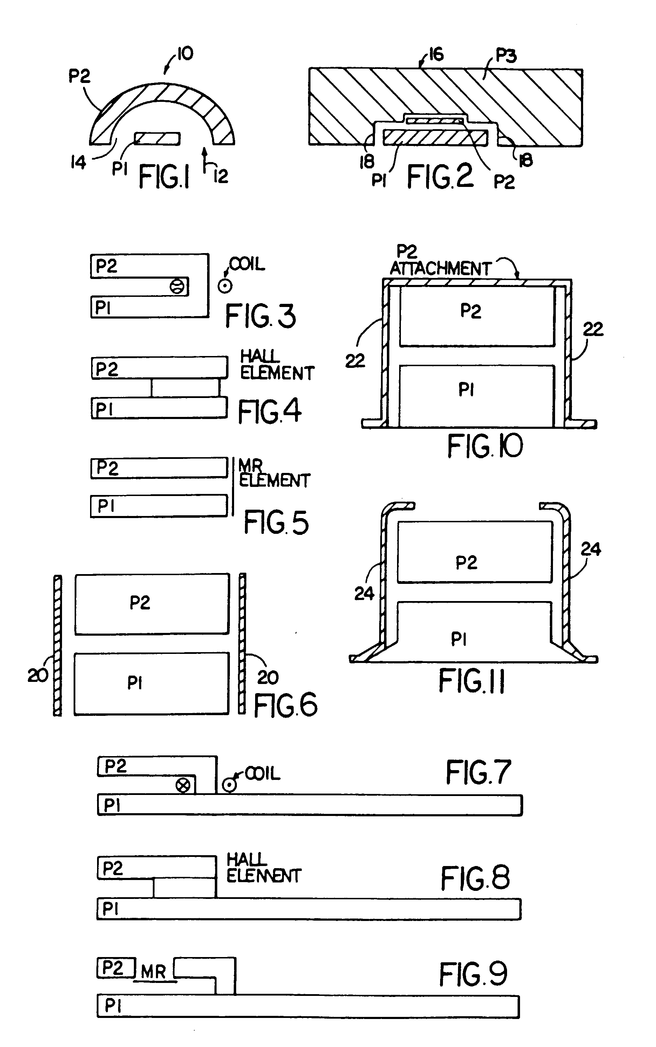

The theory on which the present invention is based will be discussed now in conjunction with Figs. 1 and 2. In Fig. 1, a two-pole head 10 suitable for both longitudinal and vertical recording includes a first pole P1 and a second pole P2. Magnetic media (not shown) moves in the direction of an arrow 12 past the head 10 so that the pole P2 is the downstream pole (last seen by the moving media). Note that the downstream pole P2 wraps around the pole P1 providing side shielding, i.e., shielding from adjacent tracks parallel to the direction parallel to the arrow 12. The side shielding in Fig. 1 causes the longitudinal field in the edge region to fall off as 1/R², where R is the distance from the side gap 14. Without the shielding afforded by pole P2 wrapping around pole P1, the field would fall off more slowly (e.g., as 1/R) so that cross talk in read and write becomes a problem. This relationship applies when the pole 10 of Fig. 1 is used for longitudinal recording.

The suppression of write fringing in perpendicular recording can be achieved by the geometry of the heads shown in Figs. 1 and 2. A three-pole head 16 of Fig. 2 is a read/write vertical head. Pole P2 is an inductive or flux sensing read pole. Pole P1 is the write pole and pole P3 is a downstream pole and provides side shield portions 18. When the geometries of Fig. 1 or Fig. 2 are used in perpendicular or vertical recording with a soft magnetic underlayer, the fringing perpendicular field falls exponentially with R. Without the side shields, the field falls off as approximately 1/R. By using side shields, the thickness of an erase guard band next to an adjacent track can be reduced.

During readback, side shields can be used to intercept flux from adjacent tracks and to prevent it from passing through the sensor. Keeping the flux out of the sensor can be difficult to achieve because different head symmetry properties call for different approaches. Completely symmetric heads are shown schematically in Figs. 3, 4 and 5 for inductive, Hall, and MR sensors, respectively, in two-pole heads. For these heads, side shields must intercept the flux and channel it equally into both poles so that no net flux goes through the sensors. Such saturable side shields 20 (Fig. 6) have equal exposure areas to both poles P1 and P2 so that they insert half the flux into each. These thin shields 20 saturate during write so that they do not soak up too much flux during write and thus lead to an overwrite problem. Therefore, they do not reduce write fringing. This can be an advantage in wiping out previous on-track data when there is significant error in track following (this process writes wide and reads narrow). In mechanic sets that have small tracking error, write shielding becomes more of an advantage and can be achieved by thickening the shields 20 so that they do not saturate during write.

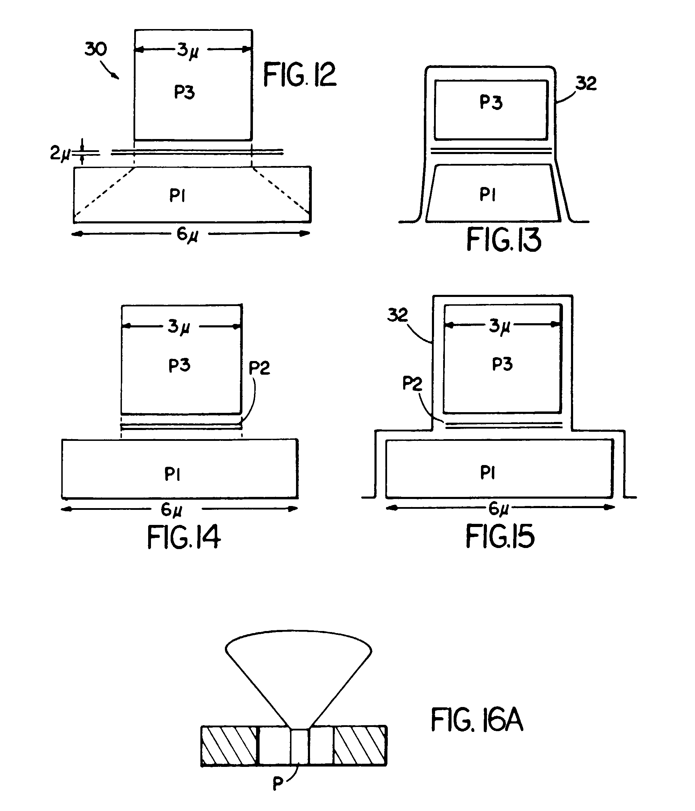

With two-pole heads that are not symmetric, side shields must be attached to the pole which is "magnetic ground" so that the fringing flux bypasses the sensor. Asymmetric heads in which the bottom pole (P1) is ground are shown in Figs. 7, 8 and 9 for inductive, Hall, and MR sensors, respectively. The pole P1 in these figures is ground because it is so much bigger than the other pole P2 and is the low reluctance path for the flux to get out to infinity. Similarly, the top pole P2 can be made into the grounded pole by making it the big one. Fig. 10 shows side shields 22 used with an asymmetric two-pole head with the pole P2 serving as the magnetic ground. The saturable side shields 22 are attached to the pole P2. Similarly, Fig. 11 shows side shields 24 used with an asymmetric two-pole head with the pole P1 serving as the magnetic ground and the saturable side shields 24 are attached to the pole P1. Thickening the side shields 22 and 24 to provide write shielding in the context of low tracking error is feasible for the P2 grounded designs of Fig. 11 and of Fig. 1. However, for longitudinal recording, write shielding with a grounded P1 (Fig. 11) will produce transverse recording which causes undesirable pulse shape effects.

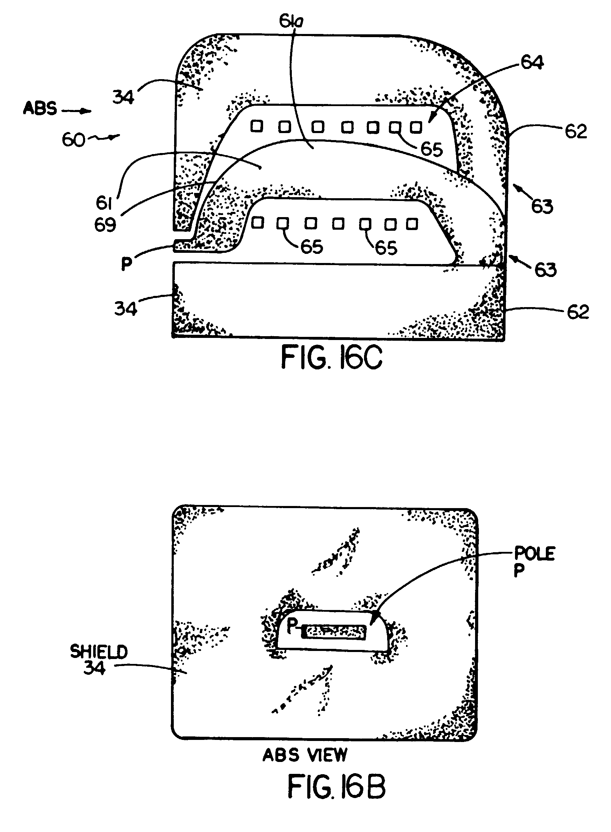

In the case of three-pole heads such as the head 16 of Fig. 2 in which the central pole is used for readback, side shielding is less problematic. The ground poles during readback are the top and bottom poles (P1 and P3). These are the poles that are used for writing. A process for producing a three-pole head with side shields is illustrated in Figs. 12, 13, 14, and 15. Fig. 12 shows a three-pole head structure 30 before ion milling is used to trim the width of the poles P2 and P1 to the width of P3 (which also serves as a mask). After trimming, a gap layer is deposited and a thin NiFe side shield layer 32 (Fig. 13) is sputtered over the structure. The shield 32 is then trimmed off with more ion milling after a mask is placed over the shield 32 so that it is not removed. Variations of this process is shown in Figs. 14 and 15. During write, the shield 32 saturates and is effectively not there. During read, it intercepts flux from adjacent tracks and channels it into P1 and P3. Little flux gets into P2 (the sense pole) because the area of exposure to P2 is small relative to P1 and P3. In Figs. 14 and 15, pole P3 is used as a milling mask for pole P2 alone. The head of Figs. 14 and 15 will have more write fringing than the head in Fig. 13.

Figs. 16A and 16B illustrate a monopole type read/write head for vertical recording in which a read/write pole tip P is surrounded by very thick, soft magnetic material 34. The thick, soft magnetic material 34 shields the pole tip P from the flux emerging out of the transitions from the adjacent or the same track during the read operation. During the write operation on vertical media with a soft underlayer, the shield 34 surrounding the pole P prevents the flux from being sprayed in the areas of the adjacent transitions on the same track or on adjacent tracks. This very thick shield dilutes the intensity of the write field (spreads over the thickness of the shield) and thus does not affect already written transitions during the write process. Fig. 16C is a side view illustration of a monopole. The head of Figs. 16A, 16B and 16C may be inductive or of the flux sensing type.

In a read/write vertical monopole structure 60, such as illustrated in Figs. 16A, 16B and 16C, the central pole, or probe 61, serves as both the read and write pole. Probe 61 extends from pole tip P to a back closure region 63. A shield 34 surrounds probe 61 (at least at tip P) in order to provide 360 degrees of radial magnetic shielding to the probe (at least at tip P). Shield 34 is also an electrical shield, forming a Faraday cage around the probe. Shield 34 is connected to probe 61 in back closure region 63. Also provided is an inductive coil 64 encircling probe 61 and having a multiplicity of solenoidal windings 65.

Solenoidal coil 64 is preferable over other coil types, such as a pancake coil, since for the same number of turns a solenoidal coil has lower resistance and lower inductance compared to a pancake coil. A low resistance head is desirable since undesirable white noise increases directly with the square root of resistance. Lower inductance is desirable because it will result in a higher resonant frequency. An optimally low inductance would be one where the resonant frequency of the coil is well beyond the operating frequency of the head so as to avoid resonance during operation. Also, lowering of inductance reduces the write circuitry power requirement and yields faster write pulse rise time.

Comparing Figs. 16B and 16C, it should be understood that shield 34 forms an encircling shield centered about the read/write monopole probe 61. As a result, in the process of reading a transition (or track) on a medium, probe 61 (and tip P) will be insensitive to the flux from adjacent transitions (or tracks). A thick shield will not affect the media in the write operation since the flux is diluted in the shield cross-section exposed to the air bearing surface. In a preferred, but not limiting, embodiment, the ratio of the air bearing surface cross-section of shield to probe may be on the order of 100:1, although 10:1 is not precluded.

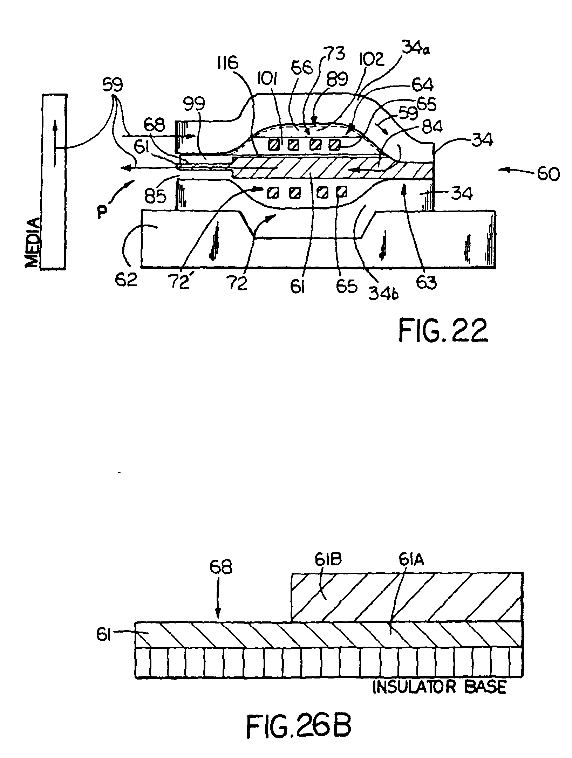

Referring now to Fig. 22, an example embodiment of a read/write monopole head 60 is shown formed upon a substrate 62, where sections 34a, 34b of shield 34 are connected in yoke closure region 63 to the end of monopole probe 61. Solenoidal coil 64, having windings 65, is formed around probe 61, similar to the structure shown in Fig. 16C. However, in this embodiment, a depression or cavity 72 is defined in substrate 62 whereby a similar cavity 72' will be defined in the lower section 34b of shield 34 which is formed upon substrate 62. A corresponding inverted cavity 73 is defined preferably in mirror-image under the upper half 34a of shield 34, such as by forming the shield upper half 34a upon an already convexly contoured insulation layer 66. This convex contour may be formed as a part of the layered buildup of the coils and insulator layers after probe 61 has been formed.

Referring again to Fig. 16C, a ramp 69 is shown connecting pole tip P with the main shaft 61a of probe 61. This ramp configuration can result in unwanted coupling of flux between probe 61 (at the ramp) and shield 34, because of the large surface area of the ramp and adjacent shield section and their proximity. To avoid such coupling, probe 61 of the embodiment of Fig. 22 is desirably kept away from the shield as much as possible, where ramp 69 is avoided by having a sleek neck 68. As well, cavities 72', 73 reduce stray coupling between shield 34 and probe 61. This benefit results from creation of a desired flux path (i.e., from the probe to the media to the shield to the back closure region of the probe -- see arrows 59) with lower reluctance than the undesired leakage path across the yoke (from pole to shield transverse to the desired flux path of arrows 59). Furthermore, the sleek neck design of Fig. 22 provides a flatter probe topography which is easier to manufacture than the steep ramp structure of Fig. 16C.

It is preferred, as shown in Figs. 16C, 22, and 27, that probe 61 be contoured to achieve increased magnetic flux conductance (or reduced reluctance) as it extends from the very thin tip P to the back closure region 63. A very thin pole tip provides better read resolution and also serves to sharply define the write field gradient, but a probe which is too thin will saturate too easily such that the probe will not be functional in the write mode. Hence, a preferred probe 61 is narrow at the pole tip and broadens as it extends away from the tip, and, at least at its tip, is preferably comprised of a material having high permeability and high saturation magnetization, such as a cobalt zirconium alloy.

In a process for making a monopole structure such as illustrated above, it is one general approach to deposit a thick magnetic material with a very wide tip cross-section as a lower part of the shield. The gap, photoresist insulating material, and coil conducting stripes are formed thereover to form the first half of the solenoidal windings, according to conventional process steps. Thereafter, another insulation layer and probe 61 (which is preferably thinner and narrower in the pole tip region and thicker and wider in the yoke region) are deposited. After this step, another set of gap layer, photoresist insulating layer, and second half of the solenoidal windings, is formed. This completes a solenoidal coil around the probe. Thereafter, another layer of photoresist insulating material is deposited and then a thick magnetic material to form the upper portion of the shield is deposited. The shield upper and lower portions are connected at the back closure region (with the probe) and in the wings of the pole tip region, which forms a complete encircling shield (at least around the pole tip). Alternative conventional techniques may be employed in the above process, including substitution of non-solenoidal transducers, without departing from the scope of the present invention.

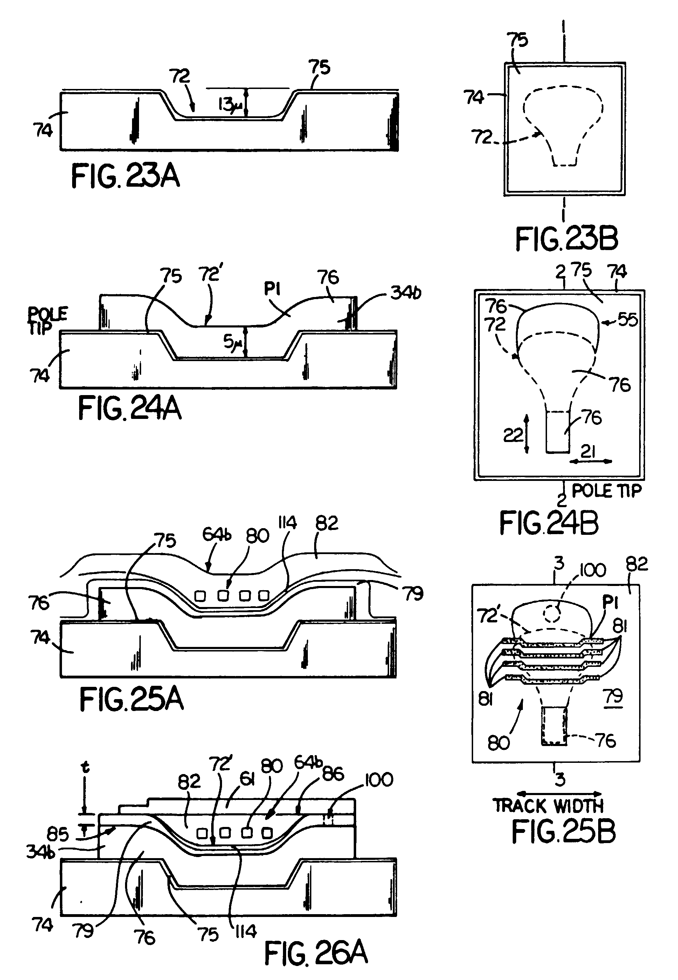

A preferred embodiment of a monopole head will now be illustrated. First, as seen in Figs. 23A,B, cavity 72 is formed or etched in substrate 74, by laser, ion, chemical or mechanical etching, for example. The substrate may be an insulating material, such as Al₂O₃. However, if the substrate is electrically conductive (e.g. AlSiMag), then an insulating material 75, such as Al₂O₃ is deposited over the substrate. The Al₂O₃ layer 75 may also serve to improve smoothness of the surface of the etched substrate 74.

Next, as seen in Fig. 24A,B, a thick magnetic material layer 76 is deposited over substrate 74 (or layer 75) to form the lower section 34b of shield 34. The yoke region of lower section 34b is confined within cavity 72 in the track width direction (the latter indicated by the transverse arrow 21). Shield section 34b extends beyond the cavity toward the pole tip and also in the back closure region 55 in the direction normal to the track width direction (the latter indicated by the longitudinal arrow 22).

Next, as seen in Fig. 25A,B, a thin insulating layer 79 (such as alumina) is deposited over layer 76 (and the out-lying portion of layer 75), and a buffer layer 114 is preferably formed in cavity 72'. Coil winding stripes 80 for the lower half 64b of the solenoidal coil 64 are formed over buffer layer 114 in the cavity. The ends 81 of stripes 80 extend over insulator 79 transversely along the track width direction beyond cavity 72' at a height above the top of the cavity to facilitate their subsequent exposure (so as to provide contact points for the second half of the solenoidal coil).

The cavity is now filled with insulating material 82 (not shown in Fig. 25B), such as photoresist or Al₂O₃, for example. If the insulating material is photoresist, then the solenoidal coil contact points, the back closure region and the wings of the shield at the pole tip can be exposed using conventional photolithographic techniques. If the insulating material is an alumina type hard material, then the coil contact points might be exposed by mechanical lapping or laser etching, for example. The back closure and the pole tip regions can be opened by various means, such as chemical, for example. In any event, these areas are exposed in order to be able to have continuity with the remaining and yet to be formed coil and shield sections and with the probe. In mechanical lapping, the thickness of the deposited stripe (and/or the pole piece) can be adjusted so as to be used as a lapping benchmark.

As seen in Fig. 26A, layers 79, and 82 are lapped down to a top surface 86. Preferably, a thickness t of an alumina layer 79 will remain to form a non-conducting gap insulator section 85 in the pole tip region, although layer 79 typically will extend over the entire workpiece. In this example, probe 61 is formed upon the lapped surface 86, running up the center of the workpiece from tip to back closure region, and is coupled to shield 34 (only lower section 34b is shown in Figs. 26A,B) through a via 100 formed in a conventional manner (via 100 shown in dotted outline in Fig. 25B).

In manufacture of probe 61, it is convenient to create a thin probe neck 68 by lamination, or perhaps by depositing a thin layer 61A shown in Fig. 26B over insulator base (which may actually comprise several insulator layers planarized to receive layer 61A). A thickening layer 61B is preferably plated over a portion of layer 61A.

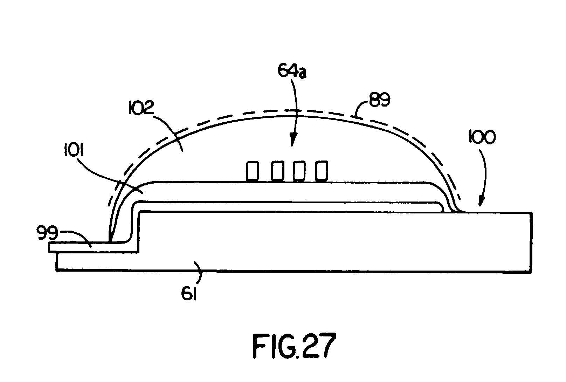

The workpiece of Fig. 26A may be completed such as shown in Fig. 27, where upper gap insulator layer 99 covers the probe top surface, except where it is etched away in the back closure region at via area 100. Next, a masked photoresist layer 101 is provided to isolate the upper coil windings section 64a of coil 64 from the probe.

Another insulating layer 102 is then formed over this structure. It will be appreciated by those skilled in the art that these steps can result in a convex topography as indicated by dotted line 89 in Fig. 27. The upper section 34a of shield 34 can be formed over this convex form, thus to produce a cavity 73 which is a relative mirror-image of cavity 72'.

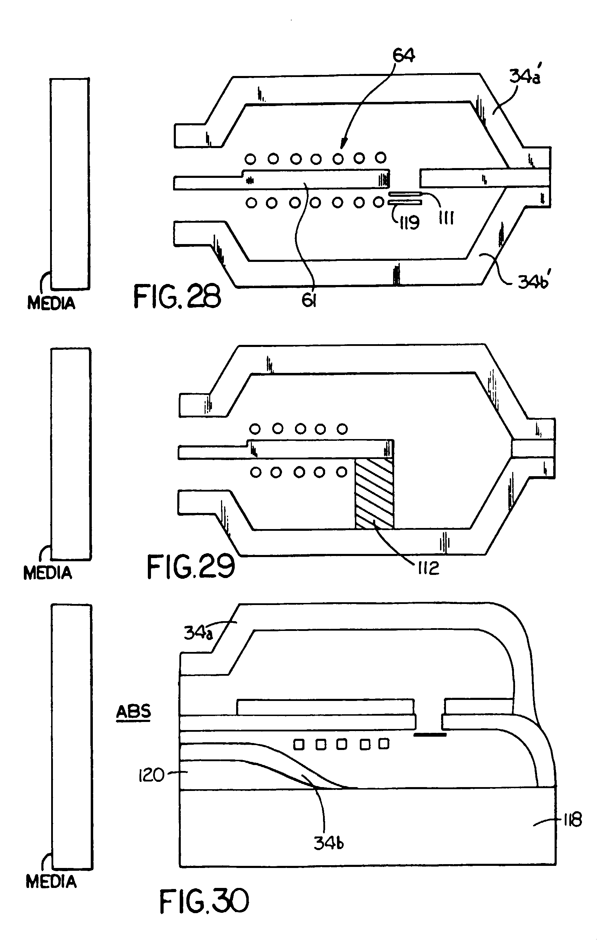

Fig. 28 is a simplified rendering of a head having an MR read sensor 111. In this case, coil 64 drives probe 61 in the write mode and MR sensor 111 senses flux in probe 61 from the medium in the read mode. In addition, the MR element may be accompanied by a conductor 119 to facilitate transverse and longitudinal biasing of the MR element. Fig. 29 shows another alternative, but with a Hall read element 112. The advantage of MR and Hall sensors is that they are velocity independent and have high signal sensitivity. The MR or Hall elements may be formed above or below the probe.

In some embodiments, a very thin shield is desirable since it will saturate in the write mode but will be effective in the read mode. This will enable writing of a wide track and reading of a narrow track, as will provide greater ease and accuracy in track following.

Another head is shown in Fig. 30, having thin shield sections 34a, 34b (i.e., at least thin at their tips). In addition, an alternate or auxilliary flux return path 118 is provided. More particularly, a ferrite or other magnetic substrate (or NiFe plated over a substrate such as AlSiMag) forms path 118, is coupled to shield 34 in the back closure section, and is separated by insulator 120 from the tip of shield section 34b at the air bearing surface (the media side). Here, shield sections 34a, 34b are relatively thin, as will saturate in writing, but will be active in reading, while path 118 is relatively quite thick to provide an unsaturated return path during writing. The return path being thick has the additional feature of spreading the flux so as not to effect the stored information on the media. As a result, a lower reluctance flux path is provided for increased read/write efficiency. While shown with an MR element, this is by way of example only and without limitation as to the scope of the invention. In a variation of this embodiment, perhaps shield section 34a might be thicker or thinner than shield section 34b, according to design choice.

The MR or Hall element or auxilliary flux conductor of Figs. 28, 29 and 30 may be made by application of conventional process technology to the novel invention described above.

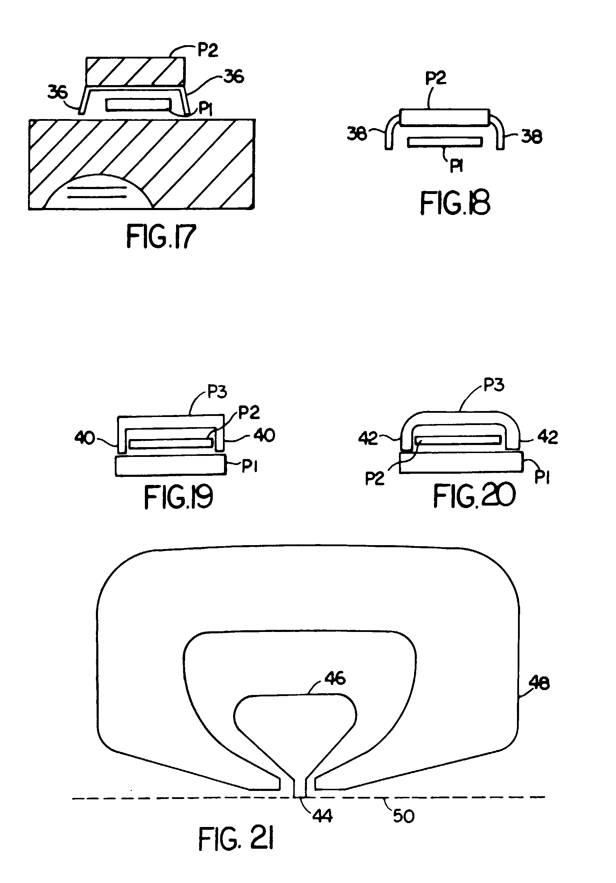

Fig. 17 illustrates a three-pole type of read/write head for vertical recording with saturable side shields 36. During the write process, the two magnetic shields or whiskers 36 saturate. During read, however, the whiskers 36 are fully effective magnetic shields which prevent flux from adjacent transitions from coming into the read pole P1. The whiskers 36 may be formed from the seed layers in the formation of the pole P2.

Another head is shown in Fig. 18 which is a saturable side shield version of Fig. 1. That is, the shields 38 are thinner than the shield portions of the pole P2 of Fig. 1. The thin side shields 38 may be the seed layers during the formation of P2, thus saving the extra process step in depositing the side shields.

Fig. 19 illustrates a three-pole read/write head for longitudinal recording. The central pole P2 may be flux sensing or an inductive type read head. The poles P1-P3 combination acts as a write pole (P2 being smaller in track width than P1 and P3, thus writing wide and reading narrow). Thin side shields 40 are a part of the pole P3. The side shields 40 may constitute the seed layer during the formation of pole P3. The side shields 40 saturate during the write operation and writes wider than read by the narrower track pole P2. Flux is shielded by the side shields 40 during the read operation. Fig. 20 is a version of the embodiment of Fig. 19 with non-saturable side shields 42 which are thicker than the side shields 40 in the embodiment of Fig. 19.

In Fig. 21 the side shield 48 is self-grounded by virtue of its large area. This type of shield protects the yoke 46 as well as the pole tips 44 from adjacent track flux. The shield does not extend down to the head media interface 50 in order to avoid converting low frequency residual cross talk into higher frequencies. This design is appropriate to monopole and two-pole heads. This design is similar to that shown in Fig. 16. It is thus seen that the magnetic heads including side shields disclosed herein reduce the negative impact of fringing during read and write, allowing for higher track density and a reduced cost per bit stored.

It is recognized that modifications and variations of the present invention will occur to those skilled in the art and it is intended that all such modifications and variations be included within the scope of the appended claims.

## Claims

1. A process for forming a magnetic head (60) comprising the steps of:
(a) providing a substrate workpiece (74) which defines in its top surface a concave feature (72) having desired transverse and longitudinal dimensions, and
(b) depositing a magnetic layer (76) over the workpiece, the layer having a concave region (72') with a surface configuration that generally resembles the concavity of the concave feature and comprising a lower shield section (34b),
(c) filling said concave region (72') of the lower shield section with filler material (82),
(d) forming a pole (61) upon the workpiece,
(e) forming an insulating layer (99,102) with a convex topography (89) over the workpiece, and
(f) forming an upper shield section (34a) over the product of step (e) in continuity with the lower shield section (34b) and the pole (61) so that said upper shield section (34a) has a configuration that generally resembles the convex topography (89) of step (e),
said process further being characterized by said upper shield section (34a) being formed in continuity with said lower shield section (34b) at a pole tip region of said magnetic head (60) to form a complete encircling shield around a tip (P) of said pole (61) to provide to said pole (61) 360 degrees of magnetic shielding against sensing by said pole (61) of flux from transitions and tracks adjacent to a transition and track to be read by said pole (61).

2. The process of claim 1 wherein step (c) is preceded by the step of forming coil winding stripes (80) over the workpiece.

3. The process of claim 2 further including forming the ends of the stripes (80) to extend transversely along the track width direction beyond the dimensions of the lower shield concave region, and wherein the filler material (82) is an insulating material and step (d) is preceded by lapping the product of step (c) to a flat surface (86).

4. The process of claim 2 wherein step (e) is preceded by the step of forming an insulating layer and upper coil windings (64a) on the workpiece, the latter windings in continuity with the existing coil stripes (80).

5. The process of claim 4 wherein the coil (64) is solenoidal.

6. The process of claim 1 wherein the pole (61) at least at the tip (P) thereof is formed with high permeability and high saturation magnetization.

7. The process of claim 6 wherein the pole (61) is formed with a cobalt zirconium alloy.

8. The process of claim 1 wherein a first region of said upper shield section (34a) is separated from a first region of the pole (61) and a second region (63) of said upper shield section (34a) is in contact with a second region (63) of said pole (61).

9. The process of claim 1 wherein said step of forming said pole comprises
causing an upper surface (86) of said filler material (82) to be substantially flat; and
forming at least a portion of said pole (61) on said substantially flat upper surface.

10. The process of claim 8 wherein said step of forming an insulating layer (99,102) includes
depositing said insulating layer over said pole so that said insulating layer (99) is relatively thin over said first region of said pole and is relatively thick over a third region of said pole aligned with said concave region (72') of said lower shield section (34b), whereby
forming said upper shield section (34a) over said insulating layer causes said upper and lower magnetic shield sections are separated by a greater amount near said third region of said pole than near said first region of said pole.

11. The process of claim 1 further comprising forming as sensor (64,111,112) adjacent to at least a portion of said pole for detecting magnetic flux conducted through said pole during said operation.

12. The process of claim 11 wherein said sensor is an inductive sensor (64).

13. The process of claim 11 wherein said sensor is a magneto-resistive (MR) sensor (111).

14. The process of claim 11 wherein said sensor is a Hall sensor (112).

15. The process of claim 8 further comprising configuring at least one of upper shield section (34a) and lower shield section (34b) so that said section will become saturated with magnetic flux when said head performs write operations on a medium.

16. The process of claim 8 further comprising configuring at least one of said upper shield section (34a) and lower shield section (34b) so that said section will not become saturated with magnetic flux when said performs write operations on a medium.

17. The process of claim 1, wherein step (f) further comprises forming the upper shield section (34a) over the product of step (e) in continuity with the lower shield section (34b) and the pole (61) in a back closure region (63) of a yoke.

18. The process of claim 1, further comprising
(g) forming coil winding stripes (80) over the workpiece,
(h) lapping the product of step (c) down to a flat surface (86), wherein step (d) comprises forming a pole (61) upon the flat surface,
(i) forming another insulating layer (99,102) and upper coil windings (64a), the latter in continuity with the existing coil stripes, over the product of step (d),
step (e) comprising forming an insulating layer (102) with a convex topography (89) over the product of step (i), and
wherein step (f) comprises forming an upper shield section (34a) over the product of step (e) in continuity with the lower shield section (34b) and the pole (61) in a back closure region (63) of a yoke.

19. The process of claim 17 or claim 18, wherein said head is a monopole head.

20. The process of claim 18, wherein step (a) includes forming the concave feature (72) by laser, ion, chemical or mechanical processing.

21. The process of claim 18, wherein step (a) includes forming a thin insulating layer (75) over the substrate.

22. The process of claim 21, wherein said substrate (74) is AlSiMag and the thin insulating layer (75) is comprised of Al₂O₃.

23. The process of claim 20, wherein step (g) is preceded by the step of depositing an optional insulating layer (75) over the lower shield section (34b).

24. The process of claim 20, wherein the lower shield section (34b) has a back closure region (63) which is confined within the transverse dimensions of the lower shield but located beyond the longitudinal dimensions of the feature.

25. The process of claim 20, wherein step (g) includes forming the ends of the stripes (80) to extend transversely along the track width direction beyond the dimensions of the lower shield (34b) concave region (72').

26. The process of claim 25, wherein in step (c) the filler material (82) is photoresist and wherein at least a portion of the ends of the stripes (80), the back closure region (63), and the lower shield section (34b) are exposed for conductivity purposes.

27. The process of claim 20, wherein step (i) is preceded by the step of forming an MR sensor (111) to be located adjacent to the pole (61).

28. The process of claim 20, wherein step (i) is preceded by the step of forming a Hall sensor (112) to be located adjacent to the pole.

29. The process of claim 20, wherein the upper and lower shield sections (34a,34b) are formed thin at least at their tips.

30. The process of claim 20, wherein the upper and lower shield sections (34a,34b) are formed thick at least at their tips.

31. The process of claim 20, further including the step of forming an alternate flux return path (118) coupled to at least one of the shield sections (34b), this shield section separated from the alternate flux return conductor by an insulation layer (120).

32. The process of claim 20, wherein step (h) may include lapping until continuity is detected between a part of the lapping system and at least one of the formed coil stripes (80), and adjusting lapping accordingly.

33. The process of claim 1, wherein the concave region defines a cavity (72) and further including the step of forming a via (100) in the back closure region (63) beyond the cavity (72') to facilitate connection of the shield sections and the pole.

## Patentansprüche

1. Verfahren zur Herstellung eines Magnetkopfes (60), umfassend die folgenden Schritte:
(a) Bereitstellen eines Substratwerkstücks (74), das in seiner Oberseite eine konkave Ausbildung (72) mit gewünschten Quer- und Längsabmessungen aufweist, und
(b) Ablagern einer Magnetschicht (76) über bzw. auf dem Werkstück, welche Schicht einen konkaven Bereich (72') mit einer Oberflächenkonfiguration aufweist, die im wesentlichen der Konkavität der konkaven Ausbildung ähnelt, und eine untere Abschirmsektion (34b) umfaßt,
(c) Ausfüllen des konkaven Bereichs (72') der unteren Abschirmsektion mit Füllmaterial (82),
(d) Formen eines Pols (61) auf dem Werkstück,
(e) Erzeugen einer Isolierschicht (99, 102) mit einer konvexen Topographie über bzw. auf dem Werkstück und
(f) Formen einer oberen Abschirmsektion (34a) über bzw. auf dem Erzeugnis von Schritt (e) in Kontinuität (oder elektrischer Durchgängigkeit) mit der unteren Abschirmsektion (34b) und dem Pol (61), so daß die obere Abschirmsektion (34a) eine Konfiguration aufweist, die im wesentlichen der konvexen Topographie (89) des Schritts (e) ähnelt,
welches Verfahren ferner dadurch gekennzeichnet ist, daß die obere Abschirmsektion (34a) an einem Polspitzenbereich des Magnetkopfes (60) in Kontinuität mit der unteren Abschirmsektion (34b) geformt wird zwecks Bildung einer vollständig umschließenden Abschirmung um eine Spitze (P) des Pols (61), um dem Pol (61) eine magnetische 360°-Abschirmung gegen vom Pol (61) abgegriffenem (Magnet-)Fluß von Übergängen und (abgegriffenen) Spuren neben einem Übergang sowie eine durch den Pol (61) auszulesende Spur zu verleihen.

2. Verfahren nach Anspruch 1, wobei dem Schritt (c) der Schritt des Formens von Spulenwicklungsstreifen (80) über bzw. auf dem Werkstück vorausgeht.

3. Verfahren nach Anspruch 2, ferner umfassend ein Ausbilden der Enden der Streifen (80), so daß sie sich transvers bzw. quer längs der Spurbreitenrichtung über die Abmessungen des unteren konkaven Abschirmbereichs hinaus erstrecken, und wobei das Füllmaterial (82) ein Isoliermaterial ist und dem Schritt (d) ein Läppen des Erzeugnisses von Schritt (c) zur Bildung einer flachen oder planen (Oberfläche (86) vorausgeht.

4. Verfahren nach Anspruch 2, wobei dem Schritt (e) der Schritt des Ausbildens einer Isolierschicht und von oberen Spulenwicklungen (64a) auf dem Werkstück vorausgeht, wobei die letzteren Wicklungen mit den vorhandenen Spulenstreifen (80) in Kontinuität bzw. Verbindung stehen.

5. Verfahren nach Anspruch 4, wobei die Spule (64) eine Solenoidspule (solenoidal) ist.

6. Verfahren nach Anspruch 1, wobei der Pol (61) zumindest an seiner Spitze (P) mit hoher Permeabilität und (hoher) magnetischer Sättigung geformt wird.

7. Verfahren nach Anspruch 6, wobei der Pol (61) mit (aus) einer Kobalt-Zirkon-Legierung geformt wird.

8. Verfahren nach Anspruch 1, wobei ein erster Bereich der oberen Abschirmsektion (34a) von einem ersten Bereich des Pols (61) getrennt ist (wird) und ein zweiter Bereich (63) der oberen Abschirmsektion (34a) mit einem zweiten Bereich (63) des Pols (61) in Kontakt steht.

9. Verfahren nach Anspruch 1, wobei der Schritt des Formens des Pols umfaßt:
im wesentlichen flaches bzw. planes Ausbilden einer Oberseite (86) des Füllmaterials (82) und
Formen zumindest eines Abschnitts des Pols (61) auf der im wesentlichen flachen bzw. planen Oberseite.

10. Verfahren nach Anspruch 8, wobei der Schritt des Erzeugens einer Isolierschicht (99, 102) umfaßt:
Ablagern der Isolierschicht über dem Pol, so daß die Isolierschicht (99) über dem ersten Bereich des Pols vergleichsweise dünn und über einem dritten Bereich des Pols, der auf den konkaven Bereich (72') der unteren Abschirmsektion (34b) ausgerichtet ist bzw. damit fluchtet, vergleichsweise dick ist, wobei
beim Formen der oberen Abschirmsektion (34a) über der Isolierschicht die oberen und unteren magnetischen Abschirmsektionen nahe dem dritten Bereich des Pols um einen größeren Betrag als nahe dem ersten Bereich des Pols getrennt sind bzw. werden.

11. Verfahren nach Anspruch 1, ferner umfassend das Formen eines Sensors (64, 111, 112) neben oder nahe mindestens einem Abschnitt des Pols, um im Betrieb durch den Pol geleiteten Magnetfluß zu erfassen.

12. Verfahren nach Anspruch 11, wobei der Sensor ein induktiver Sensor (64) ist.

13. Verfahren nach Anspruch 11, wobei der Sensor ein magnetoresistiver bzw. magnetischer Widerstands-(MR)-Sensor (111) ist.

14. Verfahren nach Anspruch 11, wobei der Sensor ein Hall-Sensor (112) ist.

15. Verfahren nach Anspruch 8, ferner umfassend das Konfigurieren mindestens einer der oberen Abschirmsektion (34a) und der unteren Abschirmsektion (34b) in der Weise, daß diese Sektion mit Magnetfluß gesättigt wird, wenn der Kopf Einschreiboperationen auf einem (Aufzeichnungs-)Medium durchführt.

16. Verfahren nach Anspruch 8, ferner umfassend das Konfigurieren mindestens einer der oberen Abschirmsektion (34a) und der unteren Abschirmsektion (34b) in der Weise, daß diese Sektion nicht mit Magnetfluß gesättigt wird, wenn der Kopf Einschreiboperationen auf einem Medium durchführt.

17. Verfahren nach Anspruch 1, wobei der Schritt (f) ferner das Formen der oberen Abschirmsektion (34a) über bzw. auf dem Erzeugnis des Schritts (e) in Kontinuität mit der unteren Abschirmsektion (34b) und dem Pol (61) in einem Rückseiten-Schließbereich (63) eines Jochs umfaßt.

18. Verfahren nach Anspruch 1, ferner umfassend:
(g) Ausbilden von Spulenwicklungsstreifen (80) über bzw. auf dem Werkstück,
(h) Herab-Läppen des Erzeugnisses von Schritt (c) auf eine flache bzw. plane Oberfläche (96), wobei der Schritt (d) das Formen eines Pols (61) auf der flachen bzw. planen Oberfläche umfaßt,
(i) Erzeugen bzw. Formen einer anderen Isolierschicht (99, 102) und von mit den vorhandenen Spulenstreifen Kontinuität aufweisenden oberen Spulenwicklungen (64a) über bzw. auf dem Erzeugnis von Schritt (d),
wobei der Schritt (e) das Erzeugen einer Isolierschicht (102) mit einer konvexen Topographie (89) über bzw. auf dem Erzeugnis des Schritts (i) umfaßt und
wobei der Schritt (f) das Formen einer oberen Abschirmsektion (34a) über bzw. auf dem Erzeugnis des Schritts (e) in Kontinuität mit der unteren Abschirmsektion (34b) und dem Pol (61) in einem Rückseiten-Schließbereich (63) eines Jochs umfaßt.

19. Verfahren nach Anspruch 17 oder 18, wobei der Kopf ein einpoliger oder Monopol-Kopf ist.

20. Verfahren nach Anspruch 18, wobei der Schritt (a) das Formen der konkaven Ausbildung (72) mittels Laser-, Ionen-, chemischer oder mechanischer Bearbeitung umfaßt.

21. Verfahren nach Anspruch 18, wobei der Schritt (a) das Erzeugen einer dünnen Isolierschicht (75) über bzw. auf dem Substrat umfaßt.

22. Verfahren nach Anspruch 21, wobei das Substrat (74) aus AlSiMag und die dünne Isolierschicht (75) aus Al₂O₃ bestehen.

23. Verfahren nach Anspruch 20, wobei dem Schritt (g) der Schritt des Ablagerns einer optionalen bzw. wahlfreien Isolierschicht (75) über bzw. auf der unteren Abschirmsektion (34b) vorausgeht.

24. Verfahren nach Anspruch 20, wobei die untere Abschirmsektion (34b) einen Rückseiten-Schließbereich (back closure region) (63) aufweist, der innerhalb der Querabmessungen der unteren Abschirmung begrenzt, aber über die Längsabmessungen der Ausbildung hinaus angeordnet ist.

25. Verfahren nach Anspruch 20, wobei der Schritt (g) das Formen der Enden der Streifen (80) in der Weise umfaßt, daß sie sich quer längs der Spurbreitenrichtung über die Abmessungen des konkaven Bereichs (72') der unteren Abschirmung (34b) hinaus erstrecken.

26. Verfahren nach Anspruch 25, wobei im Schritt (c) das Füllmaterial (82) ein Photoresist ist und wobei mindestens ein Abschnitt der Enden der Streifen (80), der Rückseiten-Schließbereich (63) und die untere Abschirmsektion (34b) für Leitfähigkeits- bzw. Leitungszwecke freigelegt sind bzw. werden.

27. Verfahren nach Anspruch 20, wobei dem Schritt (i) der Schritt des Ausbildens eines neben dem Pol (61) anzuordnenden MR-Sensors (111) vorausgeht.

28. Verfahren nach Anspruch 20, wobei dem Schritt (i) der Schritt des Ausbildens eines neben dem Pol anzuordnenden Hall-Sensors (112) vorausgeht.

29. Verfahren nach Anspruch 20, wobei die oberen und unteren Abschirmsektionen (34a, 34b) zumindest an ihren Spitzen dünn ausgebildet sind bzw. werden.

30. Verfahren nach Anspruch 20, wobei die oberen und unteren Abschirmsektionen (34a, 34b) zumindest an ihren Spitzen dick ausgebildet sind bzw. werden.

31. Verfahren nach Anspruch 20, ferner umfassend den Schritt des Ausbildens einer alternativen (alternate) Flußrücklaufstrecke (118), die an mindestens eine der Abschirmsektionen (34b) angeschlossen ist, wobei diese Abschirmsektion vom alternativen Flußrücklaufleiter durch eine Isolierschicht (120) getrennt ist.

32. Verfahren nach Anspruch 20, wobei der Schritt (h) ein Läppen bis zur Feststellung von Kontinuität (bzw. elektrischer Durchgängigkeit) zwischen einem Teil des Läppsystem und mindestens einem der geformten Spulenstreifen (80) und entsprechendes Einstellen des Läppens beinhalten kann.

33. Verfahren nach Anspruch 1, wobei der konkave Bereich eine Ausnehmung (72) festlegt, und ferner umfassend den Schritt des Ausbildens eines Durchgangs (100) im Rückseiten-Schließbereich (63) über die Ausnehmung (72') hinaus, um die Verbindung bzw. den Anschluß der Abschirmsektionen und des Pols zu begünstigen.

## Revendications

1. Procédé de fabrication d'une tête magnétique (60) comprenant les étapes consistant à :
(a) fournir une pièce à usiner formant substrat (74) qui définit dans sa surface supérieure une partie concave (72) ayant des dimensions transversales et longitudinales souhaitées, et
(b) déposer une couche magnétique (76) sur la pièce à usiner, la couche ayant une zone concave (72') avec une configuration superficielle ressemblant globalement à l'aspect concave de la partie concave et comprenant une section d'écran inférieur (34b),
(c) remplir ladite zone concave (72') de la section d'écran inférieur avec un matériau de remplissage (82),
(d) former un pôle (61) sur la pièce à usiner,
(e) former une couche isolante (99, 102) avec une topographie convexe (89) sur la pièce à usiner, et
(f) former une section d'écran supérieur (34a) sur le produit de l'étape (e) en continuité avec la section d'écran inférieur (34b) et le pôle (61), de manière à ce que ladite section d'écran supérieur (34a) ait une configuration ressemblant globalement à la topographie convexe (89) de l'étape (e),
ledit procédé étant en outre caractérisé en ce que ladite section d'écran supérieur (34a) est formée en continuité avec ladite partie d'écran inférieur (34b) au niveau d'une partie de pointe polaire de ladite tête magnétique (60) pour former un écran entourant complètement une pointe (P) dudit pôle (61), afin d'assurer audit pôle (61) un blindage magnétique sur 360 degrés contre la détection par ledit pôle (61) de flux provenant des transitions et des pistes adjacentes à une transition et une piste destinée à être lue par ledit pôle (61).

2. Procédé selon la revendication 1, dans lequel l'étape (c) est précédée par l'étape consistant à former des bandes de bobinage (80) sur la pièce à usiner.

3. Procédé selon la revendication 2, comprenant en outre le fait de former les extrémités des bandes (80) de manière à ce qu'elles s'étendent transversalement le long de la direction de la largeur d'une piste au-delà des dimensions de la zone concave d'écran inférieur, et dans lequel le matériau de remplissage (82) est un matériau isolant et l'étape (d) est précédée par l'étape consistant à roder le produit de l'étape (c) en une surface plane (86).

4. Procédé selon la revendication 2, dans lequel l'étape (e) est précédée par l'étape consistant à former une couche isolante et des bobinages supérieurs (64a) sur la pièce à usiner, ces derniers enroulements étant en continuité avec les bandes de bobinage existantes (80).

5. Procédé selon la revendication 4, dans lequel la bobine (64) est solénoïdal.

6. Procédé selon la revendication 1, dans lequel le pôle (61) est formé, au moins au niveau de la pointe (P), avec une perméabilité élevée et une aimantation à saturation élevée.

7. Procédé selon la revendication 6, dans lequel le pôle (61) est formé avec un alliage de cobalt et de zirconium.

8. Procédé selon la revendication 1, dans lequel une première zone de ladite section d'écran supérieur (34a) est séparée d'une première zone du pôle (61), et une seconde zone (63) de ladite section d'écran supérieur (34a) est en contact avec une seconde zone (63) dudit pôle (61).

9. Procédé selon la revendication 1, dans lequel ladite étape de formation dudit pôle comprend le fait de
rendre sensiblement plane une surface supérieure (86) dudit matériau de remplissage (82) ; et
former au moins une partie dudit pôle (61) sur ladite surface supérieure sensiblement plane.

10. Procédé selon la revendication 8, dans lequel ladite étape de formation d'une couche isolante (99, 102) comprend le fait de
déposer ladite couche isolante sur ledit pôle, de manière à ce que ladite couche isolante (99) soit relativement mince sur ladite première zone dudit pôle et relativement épaisse sur une troisième zone dudit pôle alignée avec ladite zone concave (72') de ladite section d'écran inférieur (34b), de façon à ce que
le fait de former ladite section d'écran supérieur (34a) sur ladite couche isolante se traduise par une séparation desdites sections d'écran supérieur et inférieur plus grande près de ladite troisième zone dudit pôle que près de ladite première zone dudit pôle.

11. Procédé selon la revendication 1, comprenant en outre la formation d'un détecteur (64, 111, 112) à proximité d'au moins une partie dudit pôle pour détecter le flux magnétique conduit à travers ledit pôle pendant ladite opération.

12. Procédé selon la revendication 11, dans lequel ledit détecteur est un détecteur inductif (64).

13. Procédé selon la revendication 11, dans lequel ledit détecteur est un détecteur magnéto-résistif (MR) (111).

14. Procédé selon la revendication 11, dans lequel ledit détecteur est un détecteur de Hall (112).

15. Procédé selon la revendication 8, comprenant en outre le fait de configurer au moins l'une de la section d'écran supérieur (34a) et de la section d'écran inférieur (34b), de façon à ce que ladite section soit saturée par un flux magnétique lorsque ladite tête réalise des opérations d'écriture sur un support.

16. Procédé selon la revendication 8, comprenant en outre le fait de configurer au moins une de ladite section d'écran supérieur (34a) et de ladite section d'écran inférieur (34b), de façon à ce que ladite section ne soit pas saturée par le flux magnétique lorsque ladite tête réalise des opérations d'écriture sur un support.

17. Procédé selon la revendication 1, dans lequel l'étape (f) comprend en outre le fait de former la section d'écran supérieur (34a) sur le produit de l'étape (e) en continuité avec la section d'écran inférieur (34b) et le pôle (61) dans une zone de fermeture arrière (63) d'une culasse.

18. Procédé selon la revendication 1, comprenant en outre les étapes consistant à
(g) former des bandes de bobinage (80) sur la pièce à usiner,
(h) roder le produit de l'étape (c) jusqu'à une surface plane (86),
dans lequel l'étape (d) comprend la formation d'un pôle (61) sur la surface plane,
(i) former une autre couche isolante (99, 102) et des bobinages supérieurs (64a), ces derniers étant en continuité avec les bandes de bobinage existantes, sur le produit de l'étape (d),
l'étape (e) comprenant la formation d'une couche isolante (102) avec une topographie convexe (89) sur le produit de l'étape (i), et
dans lequel l'étape (f) comprend la formation d'une section d'écran supérieur (34a) sur le produit de l'étape (e) en continuité avec la section d'écran inférieur (34b) et le pôle (61) dans une zone de fermeture arrière (63) d'une culasse.

19. Procédé selon la revendication 17 ou 18, dans lequel ladite tête est une tête unipolaire.

20. Procédé selon la revendication 18, dans lequel l'étape (a) comprend la formation d'une partie concave (72) par traitement au laser, ionique, chimique ou mécanique.

21. Procédé selon la revendication 18, dans lequel l'étape (a) comprend la formation d'une mince couche isolante (75) sur le substrat.

22. Procédé selon la revendication 21, dans lequel ledit substrat (74) est en AlSiMag et la couche isolante mince (75) se compose de Al₂O₃.

23. Procédé selon la revendication 20, dans lequel l'étape (g) est précédée par l'étape consistant à déposer une couche isolante éventuelle (75) sur la section d'écran inférieur (34b).

24. Procédé selon la revendication 20, dans lequel la section d'écran inférieur (34b) a une zone de fermeture arrière (63) qui est confinée dans les dimensions transversales de l'écran inférieur mais située au-delà des dimensions longitudinales de la partie.

25. Procédé selon la revendication 20, dans lequel l'étape (g) comprend le fait de former les extrémités des bandes (80) de manière à ce qu'elles s'étendent transversalement le long de la direction de la largeur de piste au-delà des dimensions de la zone concave (72') de l'écran inférieur (34b).

26. Procédé selon la revendication 25, dans lequel, à l'étape (c), le matériau de remplissage (82) est un agent photorésistant et dans lequel au moins une partie des extrémités des bandes (80), la zone de fermeture arrière (63) et la section d'écran inférieur (34b) sont exposées pour assurer la conductivité.

27. Procédé selon la revendication 20, dans lequel l'étape (i) est précédée par l'étape de formation d'un détecteur MR (111) situé à proximité du pôle (61).

28. Procédé selon la revendication 20, dans lequel l'étape (i) est précédée par l'étape de formation d'un détecteur de Hall (112) situé à proximité du pôle.

29. Procédé selon la revendication 20, dans lequel les sections d'écran supérieur et inférieur (34a, 34b) sont formées de manière à être minces au moins au niveau de leur pointe.

30. Procédé selon la revendication 20, dans lequel les sections d'écran supérieur et inférieur (34a, 34b) sont formées de manière à être épaisses au moins au niveau de leur pointe.

31. Procédé selon la revendication 20, comprenant en outre l'étape consistant à former un chemin de retour de flux alterné (118) couplé à au moins une des sections d'écran (34b), cette section d'écran étant séparée du conducteur de retour de flux alterné par une couche isolante (120).

32. Procédé selon la revendication 20, dans lequel l'étape (h) peut comprendre le fait de roder jusqu'à ce qu'une continuité soit détectée entre une partie du système de rodage et au moins une des bandes de bobinage formées (80), et d'ajuster le rodage en conséquence.

33. Procédé selon la revendication 1, dans lequel la zone concave définit une cavité (72) et comprenant en outre l'étape consistant à former une voie (100) dans la zone de fermeture arrière (63) au-delà de la cavité (72'), afin de faciliter la connexion des sections d'écran et du pôle.
